# EUROPÄISCHE PATENTSCHRIFT

(11) **EP 1 302 823 B1**
(45) Veröffentlichungstag und Bekanntmachung des Hinweises auf die Patenterteilung: **25.02.2009**
(21) Anmeldenummer: 02019538.4
(22) Anmeldetag: 02.09.2002
(51) Int. Cl.: G05B 15/02, G05B 13/02, G05B 17/02

(54) **Rechnergestützter Konfigurator zum Konfigurieren einer Anlage der Grundstoffindustrie**
Computer aided configurator for configurating a primary industry instalation
Configurateur informatisé pour configurer une installation d' industrie primaire

(30) Priorität: 14.09.2001 AT 14502001
(43) Veröffentlichungstag der Anmeldung: 16.04.2003
(73) Patentinhaber: Siemens VAI Metals Technologies GmbH & Co, 4031 Linz (AT)
(72) Erfinder: Hödl, Heinz, Dipl.-Ing., 4060 Leonding (AT)
(74) Vertreter: Maier, Daniel Oliver

(56) Entgegenhaltungen:
- EP-A- 0 747 790
- EP-A- 1 089 179
- WO-A-01/65322
- WO-A-01/67372
- US-A- 6 064 982
- US-B1- 6 212 441

## Beschreibung

Die vorliegende Erfindung betrifft einen rechnergestützten Konfigurator zum Konfigurieren einer Anlage der Grundstoffindustrie, insbesondere einer hüttentechnischen Anlage und/oder Einrichtung, sowie ein zugehöriges Verfahren zur rechnergestützten Planung einer Anlage der Grundstoffindustrie.

Es gibt eine Vielzahl von Konfiguratoren zum Konfigurieren eines bestimmtes Produktes, die entweder offline oder online betrieben werden können.

In der US 6,064,982A1 ist ein Konfigurator zur Beurteilung von Kunden Anforderungen und zur Konfiguration einer Hardware (Server) und Software Kombination, welche die Kunden Anforderungen bestmöglich erfüllt, offenbart. Die Konfiguration erfolgt hier offline in einem interaktiven Produktauswahlprozess, bei dem der Kunde mittels mehrerer Eingabemasken durch die Konfiguration geführt wird.

Aus der WO 96/02882A1 ist ein allgemeines Konfigurations-Experten-System bekannt, das an bestimmte verschiedene Konfigurationsprobleme durch Programmierung der speziellen Konfigurationsregeln angepasst werden kann. Dazu wird eine eigene Konfigurationssprache verwendet, mit der die zur Verfügung stehenden Komponenten und deren Anforderungen spezifiziert werden. Der User verwendet in Folge den fertig spezifizierten Konfigurator über ein Eingabegerät durch Selektion von zu konfigurierenden Komponenten und es werden fertige Konfigurationen an einem Display ausgegeben. Dieser Konfigurator stößt jedoch durch die statisch definierten Regeln sehr rasch an seine Grenzen, wenn Produkte konfiguriert werden sollen, deren Komponenten nicht durch einfache gegenseitige Anforderungen und Abhängigkeiten spezifiziert werden können. Dieses Experten System ist nicht in der Lage das dynamische Verhalten des konfigurierten Produktes zu beurteilen.

Es ist deshalb eine Aufgabe der vorliegenden Erfindung einen Konfigurator entsprechend dem Oberbegriff des Anspruchs 1 sowie ein Verfahren zur rechnergestützten Planung einer Anlage der Grundstoffindustrie weiterzuentwickeln, sodass die zu konfigurierenden Komponenten auch durch komplexe Anforderungen und Abhängigkeiten spezifiziert sein können und auch dynamische Vorgänge in die Konfiguration integriert werden können.

Diese Aufgabe wird durch die Erfindung entsprechend dem Konfigurator nach dem kennzeichnenden Teil des Anspruchs 1, sowie entsprechend dem rechnergestützten Verfahren nach Anspruch 6 gelöst.

Nach einer besonderen Ausführungsform des erfindungsgemäßen Konfigurators weist die Konfigurationseinheit eine Konfigurationsspeichereinheit zur Abspeicherung von Daten auf.

Nach einer besonderen Ausführungsform des erfindungsgemäßen Konfigurators ist die Konfigurationseinheit und/oder die Komponenten- und/oder Anlagendatenbank und/oder die Konfigurationsspeichereinheit und/oder die Nutzerschnittstelle auf einem Server und/oder einem Client implementierbar, und sind gegebenenfalls Client und Server über ein Netzwerk, insbesondere ein Virtual Private Network, miteinander verbunden.

Nach einer besonderen Ausführungsform des erfindungsgemäßen Konfigurators ist der Nutzer über eine Workstation oder einen PC mit der Nutzerschnittstelle des Konfigurators durch ein Netzwerk verbunden. -

Nach einer besonderen Ausführungsform des erfindungsgemäßen Konfigurators ist im Konfigurator eine externe Schnittstelle vorgesehen, wobei die externe Schnittstelle mit einem Expertensystem zum Ausführen von komplexen Rechenoperationen oder Simulationen und/oder mit einem Fachmann zur interaktiven Eingabe von zusätzlichen Daten und/oder Vorgaben verbunden ist.

Nach einer besonderen Ausführungsform des erfindungsgemäßen Konfigurators ist der Konfigurator als ein auf einem Server und/oder einer Workstation oder einem PC ablaufbares Computerprogramm implementiert.

Nach einer besonderen Ausführungsform des erfindungsgemäßen Verfahrens werden die Investitionskosten zur Fertigung und Bereitstellung, und gegebenenfalls Lieferung, der Anlage und/oder ein Zeitplan zur Fertigung und Bereitstellung, und gegebenenfalls Lieferung, der Anlage bestimmt.

Nach einer besonderen Ausführungsform des erfindungsgemäßen Verfahrens umfasst die Planung die Fertigung und die Bereitstellung, sowie die Installation und/oder die Inbetriebnahme der Anlage, wobei die Investitionskosten zur Installation und/oder Inbetriebnahme der Anlage und/oder ein Zeitplan für die Installation und/oder Inbetriebnahme der Anlage bestimmt werden.

Nach einer besonderen Ausführungsform des erfindungsgemäßen Verfahrens weist die zu planende Anlage der Grundstoffindustrie eine Stranggießanlage auf.

Nach einer besonderen Ausführungsform des erfindungsgemäßen Verfahrens gibt der Anwender, vorzugsweise über die Nutzerschnittstelle, eine oder mehrere der folgenden Daten ein:
- Gewünschte Produktionsleistung (zu verarbeitende Menge Stahl)
- Vergossene Stahlqualitäten
- Pfannengröße
- Chargenanzahl pro Sequenz
- Gewünschte Breite des gegossenen Stranges
- Gewünschte Dicke des gegossenen Stranges

Nach einer besonderen Ausführungsform des erfindungsgemäßen Verfahrens werden in dem Projektierungsverfahren eine oder mehrere der folgenden Daten zur Konfiguration der Stranggießanlage bestimmt, insbesondere berechnet:
- Leistung der Stranggießanlage
- Anzahl der Stränge
- Maximale Gießgeschwindigkeit
- Länge der Stranggießmaschine
- Gießradius

Nach einer besonderen Ausführungsform des erfindungsgemäßen Verfahrens enthalten die zur Konfiguration der Stranggießanlage herangezogenen Modelle zumindest eines der folgenden Modelle:
- Modell zur Bestimmung und/oder Optimierung der Leistung der Stranggießanlage
- Modell zur Bestimmung und/oder Optimierung der Anzahl der Stränge
- Modell zur Bestimmung und/oder Optimierung der maximalen Gießgeschwindigkeit
- Modell zur Bestimmung und/oder Optimierung der Länge der Stranggießmaschine
- Modell zur Bestimmung und/oder Optimierung des Gießradius
- Modell zur Preisbildung, insbesondere zur Berechnung des Preises der Anlage bzw. deren Komponenten

Nach weiteren Ausführungsformen des erfindungsgemäßen Verfahrens sind Modelle zur Erzeugung einer Simulation und/oder andere anlagenspezifischen Modelle vorgesehen. Bei einer Stranggießanlage werden beispielsweise Modelle zur Bestimmung und/oder Optimierung der Geschwindigkeit der Bramme, beispielsweise zur Bestimmung und/oder Optimierung der sogenannten Brennschneidmitfahrlänge, verwendet.

Nach einer besonderen Ausführungsform des erfindungsgemäßen Verfahrens werden zur Ausgabe des strukturierten Konfigurationsvorschlages beschreibende Unterlagen, gegebenenfalls in Form schriftlicher Ausschreibungsunterlagen, und/oder eine, vorzugsweise zwei- und/oder dreidimensionale, Ansicht der Anlage und/oder der Komponenten der Anlage und/oder eine Simulation der Anlage erstellt werden.

Die Erfindung betrifft weiters ein Verfahren zum Betrieb eines Konfigurators nach Anspruch 14, sowie eine Verwendung eines Konfigurators nach Anspruch 15 und eine E-Business Plattform nach den Ansprüchen 16 und 17.

Nach einer besonderen Ausführungsform der Erfindung werden zum Konfigurieren einer Anlage bzw. eines Produktes, beispielsweise einer Stranggießanlage, die Schritte Bereitstellen von Komponenten- und/oder Produktdaten in einer Datenstruktur, Eingabe von nutzerspezifischen Daten und/oder Vorgaben über eine Nutzerschnittstelle durch einen berechtigten Nutzer, Konfiguration des Produktes durch Verknüpfen von nutzerspezifischen Daten und/oder Vorgaben mit in der Datenstruktur vorhandenen Komponenten- und/oder Produktdaten durch das Produkt modellierende verfügbare logische Regeln und/oder komplexe Abhängigkeiten und/oder Algorithmen, beispielsweise eine iterative Optimierung, und/oder Modellen, beispielsweise für eine Simulation, und/oder Künstliche-Intelligenz-Modellen und Anzeigen des konfigurierten Produktes in Form eines strukturierten Konfigurationsvorschlages durchgeführt.

Es ist nach einer Ausführungsform der Erfindung möglich die Komponenten nicht nur durch einfache gegenseitige Abhängigkeiten zu beschreiben, sondern auch durch komplexe Beziehungen zueinander, die in der Form von ablaufbaren Algorithmen oder Simulationen oder anhand von bestimmten Modellen aufgelöst werden können. Damit können auch komplexe technische Produkte optimal konfiguriert werden, was die Planung eines solchen Produktes wesentlich unterstützt. Die Konfiguration beschränkt sich dabei nicht nur auf ein Zusammenstellen von einzelnen Komponenten, sondern es können auch bestimmte Komponenten oder das Produkt ideal dimensioniert werden. Außerdem wird es durch die Anwendung von Simulationen möglich, eine Vorhersage des Produktverhaltens unter bestimmten Bedingungen zu treffen, es wird also das dynamische Verhalten des Produktes bewertet. Es ist also bereits in der Planungsphase möglich, ein mögliches Fehlverhalten des Produktes unter realen Bedingungen vorherzusehen, wodurch Kosten durch Fehlplanungen vermieden werden können. Dies kommt sowohl dem Nutzer des Konfigurators, durch die entstehende Zeit- und Geldersparnis in der Planungsphase und die Kenntnis des Produktverhaltens, als auch einem Hersteller und/oder Lieferant oder Anbieter, durch die Reduzierung von Beanstandungen und die einheitliche Konfigurationsschnittstelle, zugute.

In einer vorteilhaften Ausführungsform ist die Nutzerschnittstelle mit der Konfigurationseinheit und der Komponenten- und/oder Produktdatenstruktur zum Austausch von Daten über ein Netzwerk verbunden und weiters die Konfigurationseinheit mit der Komponenten- und/oder Produktdatenstruktur und einer Konfigurationsspeichereinheit zum Austausch von Daten verbunden.

Der Ablauf der Konfiguration kann wesentlich vereinfacht werden, wenn eine Konfiguration durch die Konfigurationseinheit als eine Serie von einzelnen Konfigurationsschritten ausführbar ist und durch die Konfigurationseinheit bei zumindest einem Konfigurationsschritt Daten generierbar sind, die bei einem der nächsten Konfigurationsschritte als Eingabedaten verwendbar sind. Damit kann die komplexe Konfigurationsaufgabe in mehrere einzelne Teilschritte unterteilt werden, die einfacher und dadurch übersichtlicher beschrieben werden können und gleichzeitig eine einfachere Kontrolle des Ablaufes der Konfiguration zulassen.

In einer besonders günstigen Variante weist die Nutzerschnittstelle zumindest eine Eingabemaske zur Eingabe der Daten und/oder Vorgaben für zumindest einen Konfigurationsschritt auf und das Ergebnis jedes Konfigurationsschrittes ist über diese Nutzerschnittstelle ausgebbar und kontrollierbar. Dadurch steht dem Nutzer für alle Eingaben und Kontrolltätigkeiten eine einheitliche Schnittstelle zur Verfügung, was die Bedienung des Konfigurators für den Nutzer erleichtert.

Um den Konfigurator so flexibel und durch den Nutzer steuerbar zu machen ist es nach einer Ausführungsform vorteilhaft, wenn jeder beliebige Konfigurationsschritt mit anderen nutzerspezifischen Daten oder Vorgaben wiederholter ist und bei zumindest einem Konfigurationsschritt eine bestimmte Komponente oder ein bestimmtes Produkt aus der Komponenten- bzw. Produktdatenstruktur über die Nutzerschnittstelle durch den Nutzer auswählbar ist. Der Nutzer hat damit neben der vollständigen automatischen Konfiguration die Möglichkeit, bestimmte Präferenzen zu setzen oder gezielt verschiedene Konfigurationsvarianten zu testen.

Nach einer Ausführungsform der Erfindung wird die Bedienung des Konfigurators für den Nutzer erleichtert, indem eine bereits begonnene Konfiguration an einer beliebigen Stelle unterbrechbar und in einer Konfigurationsspeichereinheit abspeicherbar ist und eine abgespeicherte Konfiguration zu jeder Zeit an der abgebrochenen Stelle wieder aufnehmbar ist. Da eine Konfiguration eines komplexen technischen Produktes mitunter sehr lange dauern kann, ist es sehr vorteilhaft die Konfiguration an einer beliebigen Stelle unterbrechen und zu einem späteren Zeitpunkt wieder aufnehmen zu können.

Besonders vorteilhafte Ausführungsformen erhält man, wenn die Konfigurationseinheit auf einem Server implementierbar ist und/oder die Komponenten- und/oder Produktdatenbank auf einem Server implementierbar ist und/oder die Nutzerschnittstelle auf einem Server und/oder einem Client implementierbar ist und/oder die Konfigurationsspeichereinheit auf einem Server implementierbar ist und/oder der Nutzer über eine Workstation oder einen PC mit der Nutzerschnittstelle des Konfigurators durch ein Netzwerk verbunden ist. Damit ist eine überaus flexible Systemarchitektur verwirklichbar, die überdies leicht wartbar und ausbaubar ist.

In einer weiteren sehr vorteilhaften Ausführungsform ist im Konfigurator eine externe Schnittstelle vorgesehen, die mit einem Expertensystem zum Ausführen von komplexen Rechenoperationen oder Simulationen und/oder mit einem Fachmann zur interaktiven Eingabe von zusätzlichen Daten und/oder Vorgaben verbunden ist. Bei besonders aufwendigen Simulationen, die sehr viel Rechenkapazität benötigen ist es sehr vorteilhaft, diese auf externe Expertensystem auszulagern, da dadurch die Ressourcen des Konfigurators durch eine einzige Konfigurationsaufgabe nicht übermäßig beansprucht werden. In Fällen in denen der Konfigurator selbsttätig zu keiner Lösung finden kann, ist es sehr vorteilhaft, wenn ein externer Fachmann zur Unterstützung kontaktiert werden kann.

Ganz besonders vorteilhaft ist es, nach einer vorteilhaften Ausführungsform der Erfindung, wenn Komponenten- und/oder Produktdaten durch den Betreiber des Konfigurators und/oder einen beliebigen berechtigten Hersteller und/oder Lieferant oder einen Administrator über ein Netzwerk in der Komponenten- bzw. Produktdatenstruktur hinzufügbar und/oder entfernbar sind und/oder die Regeln, Abhängigkeiten oder Algorithmen in der Konfigurationseinheit gemäß den hinzugefügten und/oder entfernten Komponenten- und/oder Produktdaten anpassbar sind. Damit ist der Umfang der zur Konfiguration zu Verfügung stehenden Komponenten- und/oder Produktdaten vollkommen dynamisch. Der Konfigurator ist somit beliebig um zusätzliche Produkte, beispielsweise weitere hüttentechnische Einrichtungen, erweiterbar.

Nach einer besonderen Ausführungsform der Erfindung wird die Bedienung des Konfigurators für den Nutzer weiter vereinfacht, wenn eine Konfiguration an jeder Stelle durch den Nutzer unterbrechbar ist und über die externe Schnittstelle ein dazu berechtigter Hersteller und/oder Lieferant oder Fachmann zur Unterstützung konsultierbar ist. Dadurch erhält der Nutzer die Möglichkeit in unklaren Situationen den Hersteller und/oder Lieferant oder einen Fachmann zu kontaktieren um bestimmte Dinge zu klären, bevor mit der Konfiguration fortgefahren wird.

Nach einer Ausführungsform der Erfindung ist es für den Nutzer besonders günstig, wenn für das endkonfigurierte Produkt ein Preis berechenbar und ausgebbar ist und das endkonfigurierte Produkt direkt online oder schriftlich beim Hersteller und/oder Lieferant und/oder dem Betreiber des Konfigurators und/oder über einen Vertriebspartner bestellbar ist. Außerdem ist es sehr vorteilhaft, wenn der strukturierte Konfigurationsvorschlag in eine Inventarliste umgewandelt wird und zumindest einem Teil der Inventarliste eine eindeutige Seriennummer zugeordnet wird. Der Nutzer kann also das technische Produkt selbstständig konfigurieren, erhält sofort die Preisinformation für das endkonfigurierte Produkt und kann das Produkt sofort bestellen, was den Planungs- und Angebotszyklus wesentlich verkürzt. Durch die Vergabe von eindeutigen Seriennummern kann die Geschichte eines konfigurierten Produktes zu jeder Zeit rekonstruiert werden.

In einer vorteilhaften Ausführungsform ist der Konfigurator als ein auf einem Server, Workstation oder PC ablaufbares Computerprogramm implementiert, was die Flexibilität erhöht, da das Computerprogramm mit einfachen Mitteln verändert und verbessert werden kann.

Der Konfigurator wird ganz besonders vorteilhaft in einer E-Business Plattform, bei der alle Teilnehmer durch den Konfigurator über ein Netzwerk miteinander verbunden sind und in der technische Anlagen über den Konfigurator planbar, insbesondere konfigurierbar, sind und direkt online beim Hersteller und/oder Lieferant und/oder beim Betreiber des Konfigurators und/oder einem Vertriebspartner bestellbar sind, angewendet. Weiters ist es sehr vorteilhaft, wenn in den Konfigurator neben den Kunden und dem Vertrieb noch andere Dienstleistungsanbieter, wie z.B. Hersteller, Lieferant, Logistik, Finanzierung, Instandhaltung, Errichtung, etc, eingebunden sind und die einzelnen Dienstleistungsanbieter in der Planungs-, Ausführungs- und Betreuungsphase für die geplante technische Anlage miteinander über die E-Business Plattform durch den Konfigurator in Verbindung stehen und auf die gleichen Produkt- und/oder Konfigurationsdaten zugreifen. Der Konfigurator fungiert damit als zentrales Element über die gesamte Lebenszeit, von der Planung (Konfiguration) bis zur Ausführung und Wartung, einer technischen Anlage. Alle beteiligten Personen können dabei über den Konfigurator auf die selben Daten zugreifen und direkt miteinander kommunizieren, was den Aufwand für den Hersteller und/oder Lieferant und auch den Nutzer wesentlich verringert.

Nach einer Ausführungsform der Erfindung besteht für einen potentiellen Kunden (Nutzer) die Möglichkeit, online eine Anlage und/oder Vorrichtung der Grundstoffindustrie zu konfigurieren, und gegebenenfalls einen Budgetpreis inklusive Anlagenbeschreibung zu erstellen.

Das Arbeitsergebnis dieser Konfiguration beinhaltet dabei beispielsweise:
- Angabe eines Budgetpreis (process turn-key und/oder turn-key)
- Bestimmung einer auf die Wünsche und Bedürfnisse des Kundens abgestimmten Anlagenkonfiguration
- Bestimmung und Ausgabe einer technischen Spezifikation der Anlagen
- Bestimmung und Ausgabe einer neutralen Ausschreibungsspezifikation
- Erstellung einer 3D-Präsentation mit Animation

Nach einer bevorzugten Ausführungsform konfiguriert der Kunde eine gewünschte Anlage, wobei er aufgrund einer Vielzahl von Auswahlmöglichkeiten die optimalen Anlagenkomponenten, mit entsprechender technischer Beschreibung, sowie eine 3D-Darstellung, vorzugsweise mit einer entsprechenden Animation, zusammenstellt. Der Kunde wird jeweils durch den Konfigurator über die Vor- und Nachteile der spezifischen Anlagenkomponenten informiert.

Nach einer besonderen Ausführungsform erstellt der Konfigurator, auf Wunsch des Kunden, eine, weitgehend, neutrale technische Anfragespezifikation, die direkt an andere Anbieter übermittelt werden kann.

Nach einer weiteren Ausführungsform kalkuliert ein Preismodell auf Basis der konfigurierten Anlage (Process turn-key) einen Budgetpreis, der als Basis für die Investitionsentscheidung des Kunden zur Verfügung steht.

Nach einer weiteren Ausführungsform stellt der Konfigurator dem Kunden, auf Wunsch, Budgetpreise für die Abschätzung der schlüsselfertigen Anlage, d.h. inklusive Wasseraufbereitung und/oder Montage und/oder Bauarbeiten etc. zur Verfügung.

Nach einer weiteren Ausführungsform erstellt der Konfigurator weiters einen typischen Projektterminplan. Abhängig vom Kundenland und/oder näherer Informationen zur Wahl der Fertigung der Anlagenkomponenten kann der Konfigurator einen Zeitplan zur Projektrealisierung bestimmen.

Entsprechend der besonderen Ausführungsformen ergeben sich folgende Kundenvorteile:
- Die Online-Konfiguration ermöglicht rasch einen Budgetpreis zu erstellen, der als Grundlage für die Investitionsentscheidung des Kunden dient
- Erstellung einer neutralen Spezifikation als Basis für eine Ausschreibung an mehrere Mitanbieter
- Auswahl der optimalen Anlagenkonfiguration durch Auswahl der Anlagenkomponenten
- Kunde kann im, vorzugsweise 3-dimensionalen, Simulationsmodell die Komponenten mit ihren Vorteilen und Beschreibung, vorzugsweise online, studieren und beliebig konfigurieren

Entsprechend der besonderen Ausführungsformen ergeben sich folgende Vorteile für den Anbieter einer solchen zu konfigurierenden Anlage bzw. Betreiber des erfindungsgemäßen Konfigurators:
- Reduzierte Vorprojektkosten
- Geringe Personalkapazitäten notwendig, da erste Anfragen und Budgetpreis vom Kunden selbst elaboriert werden können.
- Größere Auftragschancen durch besseres und unmittelbares Service am Kunden

Nach einer besonderen Ausführungsform der Erfindung werden zur Konfiguration einer Stranggießanlage folgende Daten durch den Kunden zumindest teilweise bereit gestellt:
- Gewünschte Produktionsleistung (zu verarbeitende Menge Stahl)
- Vergossene Stahlqualitäten
- Pfannengröße
- Chargenanzahl pro Sequenz
- Gewünschte Breite des gegossenen Stranges
- Gewünschte Dicke des gegossenen Stranges

Nach einer besonderen Ausführungsform bestimmt der Konfigurator folgende Kennwerte der Stranggießanlage:
- Leistung der Stranggießanlage
- Anzahl der Stränge
- Maximale Gießgeschwindigkeit
- Länge der Strangießmaschine
- Gießradius

Nach einer weiteren Ausführungsform der Erfindung erfolgt eine zumindest teilweise Visualisierung der Anlage, die beispielsweise beinhaltet:
- 3D-Darstellung der Komponenten mit Vorteilen und mit teilweiser Simulation und/oder
- Beschreibung der Komponenten und/oder
- Modulares Design:
   Austausch der Komponenten durch andere technische Lösungen möglich (Modulbauweise), beispielsweise:
      Drehturm: Butterfly / Säulendrehturm / C-type Butterfly
      Verteilertransport: Wagen / Drehturm
      Oszillierer: hydraulischer/ 4-Exzenter;
      Rollen: I-STAR / CSR Rolle / Revolverrolle

Die vorliegende Erfindung wird anhand der beispielhaften und nicht einschränkenden Figuren 1 bis 3 beschrieben. Die Figuren zeigen:
Fig. 1 ein schematisches Blockschaltbild eines erfindungsgemäßen Konfigurators
Fig. 2 ein schematisches Blockschaubild des Verfahrensablaufes einer Planung einer Anlage
Fig. 3 ein schematisches Blockschaubild des Ergebnisses der Planung einer Anlage

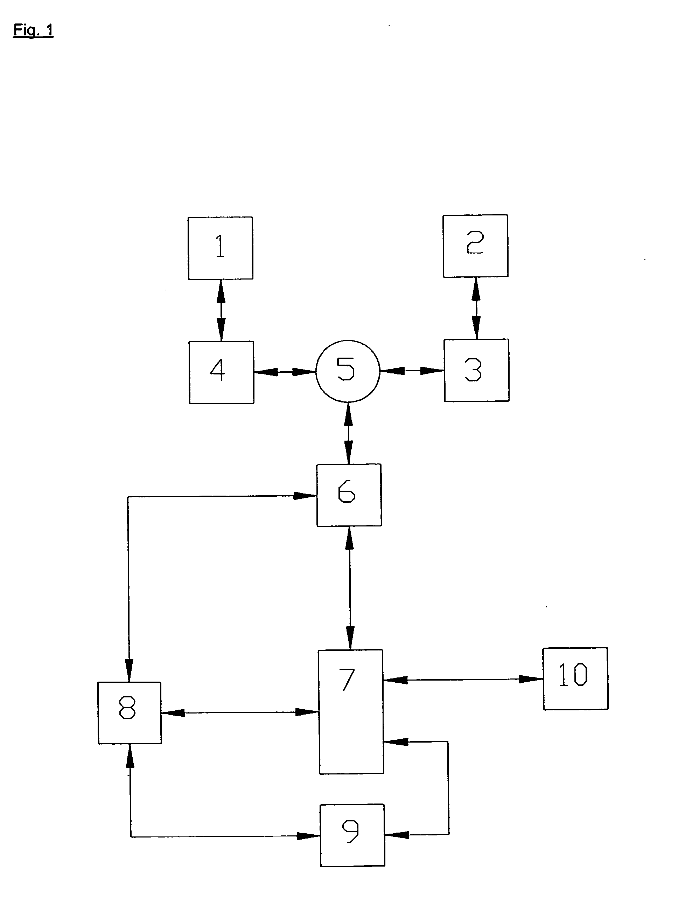

Nach Fig. 1 tritt ein Nutzer 1 über eine Workstation 4 oder einen PC unter Zwischenschaltung eines Netzwerkes 5 mit einer Eingabe-Ausgabe-Schnittstelle, beispielsweise einer Nutzerschnittstelle 6, in Kontakt. Die Eingabe-Ausgabe-Schnittstelle 6 steht wiederum mit einer Konfigurationseinheit 7 in Verbindung. Über die Eingabe-Ausgabe-Schnittstelle werden der Konfigurationseinheit alle für die Konfiguration und/oder Auslegung der Anlage maßgebliche Daten bereitgestellt. Die Bereitstellung der Daten kann dabei durch Ausfüllen entsprechender Eingabemasken erfolgen. Die Konfigurationseinheit 7 beinhaltet verschiedene Modelle, Algorithmen, Expertensysteme, iterative Optimierungstools, die für die Auslegung der Anlage bereitstehen. Sollte es für die Konfigurationseinheit nicht möglich sein eine befriedigende Konfiguration erstellen zu können, steht eine externe Schnittstelle 10 bereit, über die bei Bedarf ein externer Experte, beispielsweise ein externes Expertensystem und/oder ein Fachingenieur, beigezogen werden kann. Es ist weiters eine Datenbank 8 vorgesehen, die die genaue Beschreibung der zu konfigurierenden Komponenten, ausführliche Vorteilsargumente, drei- und/oder zweidimensionsale Darstellungen der Komponenten, Vorschriften zur Simulation der Komponenten, Vorschriften zur Erstellung einer technischen Anlagenspezifikation, Vorschriften zur Berechnung der Kostenbasis (process turn key, turn key) etc. enthält.

In einem Konfigurationsspeicher 9 kann die, beispielsweise unterbrochene, Konfiguration zwischengespeichert und zu anderer Zeit wieder aufgerufen werden. Aus dem Konfigurationsspeicher 9 kann die Zwischenspeicherung zum Zwecke einer längerfristigen Speicherung in die Datenbank 8 übertragen werden.

Weiters ist eine Verbindung zwischen der Datenbank 8 und der Eingabe-Ausgabe-Schnittstelle vorgesehen, durch welche ein autorisierter Hersteller und/oder Lieferant 2 einer Komponente, beispielsweise über eine Workstation 3, direkt auf den Datensatz der Datenbank zurückgreifen, und diesen aktualisieren kann.

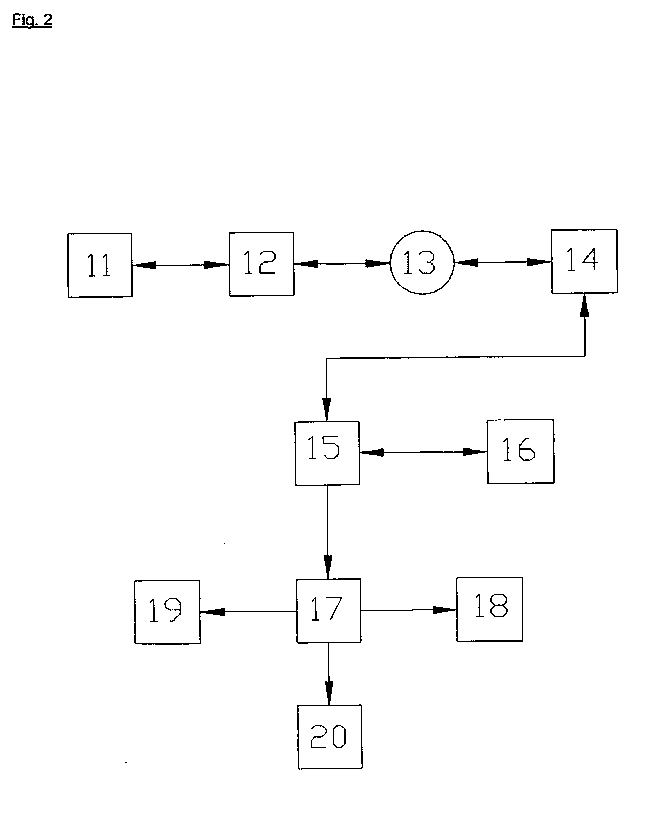

In Fig. 2 ist ein Ablaufdiagramm dargestellt, das aus Sicht des Nutzers die Funktion des Konfigurators verdeutlicht.

Der Nutzer 11 ist über eine Workstation oder einen PC 12 mit einem Netzwerk 13 verbunden, das ihn, gegebenenfalls nach einer erfolgten Identifikation, mit der Eingabe-Ausgabe-Schnittstelle 14 des Konfigurators verbindet. Nach Beantwortung verschiedener für die Konfiguration der Anlage wesentlicher Fragen, und Eingabe der wesentlichen Daten gelangt der Nutzer zur Konfiguration 15. Der Nutzer wird dabei nach einer Ausführungsform über die einzelnen Konfigurationsschritte informiert und erhält die Möglichkeit in diese interaktiv einzugreifen. Dabei ist es für den Nutzer nach einer Ausführungsform möglich zu Anfangs eingegebenen Kenndaten der gewünschten Anlage nochmals zu korregieren und/oder aus verschiedenen Konfigurationsmöglichkeiten zu wählen. Es ist weiters möglich die Konfiguration zumindest teilweise zu wiederholen und/oder zu unterbrechen und/oder zu einem späteren Zeitpunkt wiederum fortzusetzen. Die Konfiguration 15 kann dabei auf externe Ressourcen 16, beispielsweise einen Fachingenieur und/oder ein externes Expertensystem, zurückgreifen. Ist die Konfiguration abgeschlossen, gelangt der Nutzer zur Ausgabe bzw. Anzeige 17, die dem Nutzer die, nach seinen Wünschen, konfigurierte Anlage ausgibt bzw. anzeigt. Dabei werden dem Nutzer der Preis der Anlage, der Umfang des Investments, eine detaillierte Beschreibung der Anlage und seiner Komponenten, sowie auf Wunsch entsprechende Präsentationsunterlagen zur Verfügung gestellt. Weiters ist es möglich eine Simulation der konfigurierten Anlage zu Erzeugen, die dem Kunden ebenfalls, beispielsweise zu Präsentationszwecken zur Verfügung gestellt wird. Es ist ebenfalls möglich, dass auf Wunsch des Nutzers, auf Basis der Konfiguration, eine Auschreibungsspezifkation erstellt und dem Nutzer zur Verfügung gestellt wird, womit der Nutzer vergleichbare Angebote bei weiteren Herstellern und/oder Lieferanten anfordern kann.

Je nach Wunsch kann der Nutzer nun eine Aufforderung zur verbindlichen Angebotslegung an den Hersteller und/oder Liferanten der konfigurierten Anlage 19, und/oder eine direkte Bestellung durchführen 20. Es ist für den Nutzer weiters möglich die erstellte Konfiguration zu speichern 18, und diese gegebenenfalls zu einem späteren Zeitpunkt weiter zu bearbeiten.

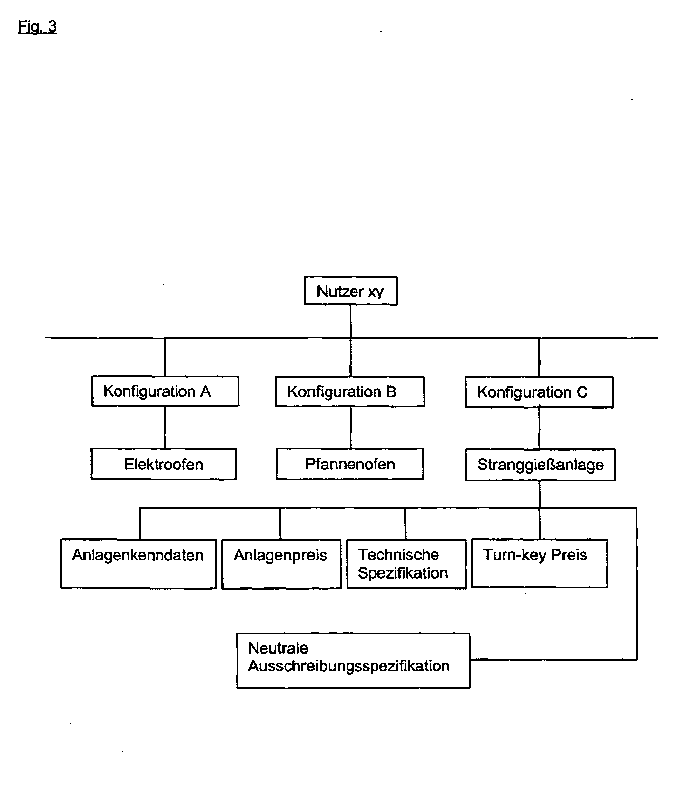

Nach Fig. 3 ist entsprechend einer besonderen Ausführungsform das Ergebnis einer Planung einer Anlage nach dem erfindungsgemäßen Verfahren bzw. unter Einbindung des erfindungsgemäßen Konfigurators dargestellt.

Dabei hat ein Nutzer xy eine Anlage geplant, die verschiedene konfigurierte und/oder ausgelegte Einrichtungen der Hüttenindustrie beinhaltet. In der schematischen Skizze sind drei typische Konfigurationen beispielhaft herausgestellt. Eine Konfiguration A beinhaltet eine Konfiguration eines Elektroofens, eine Konfiguration B eine Konfiguration eines Pfannenofens, sowie eine Konfiguration C eine Konfiguration und Auslegung (inkl. Planung der Lieferung und/oder Installation und/oder Inbetriebnahme) einer Stranggießanlage. Natürlich können weitere Konfigurationen bzw. Auslegungen weiterer Anlagen und/oder Anlagenteile nach dem erfindungsgemäßen Verfahren bzw. unter Einbindung des ererfindungsgemäßen Konfigurators erstellt werden.

Die Konfiguration und Auslegung der Stranggießanlage enthält: die Kenndaten der Einrichtung (beispielsweise die verwendete Kokillenart), den Preis (Herstellung, Bereitstellung) der Einrichtung, die genaue technische Spezifikation der Einrichtung und deren Teile, einen turn-key Preis (Preis inkl. Lieferung und Errichtung bis zur Inbetriebnahme). Alle diese Daten können dem Nutzer ausgegeben bzw. angezeigt werden. Als Art der Ausgabe ist beispielsweise eine, insbesondere softwaregesteuerte, Präsentation denkbar, die eine Anzeige und/oder Simulation aller wesentlichen Teile der Anlage/Einrichtung (Konfiguration/Auslegung C gegebenenfalls mit Konfiguration A und/oder Konfiguration B) enthält, wobei alle technischen sowie wirtschaftlichen (Preis etc.) wesentlichen, insbesondere die Anlage/Einrichtung beschreibende, Daten in die Simulation/Präsentation implementiert sind.

Auf Wunsch erhält der Nutzer weiters eine neutrale Ausschreibungsspezifikation der konfigurierten und/oder ausgelegten Anlage/Einrichtung (Konfiguration/Auslegung C gegebenenfalls mit Konfiguration A und/oder Konfiguration B).

## Patentansprüche

1. Rechnergestützter Konfigurator zum Konfigurieren einer Anlage der Grundstoffindustrie, insbesondere einer hüttentechnischen Anlage und/oder Einrichtung, der folgende Teile aufweist:
• eine Nutzerschnittstelle (6) zur Eingabe nutzerspezifischer Daten und/oder Vorgaben durch einen berechtigten Nutzer (1), sowie gegebenenfalls zur Anzeige und/oder Ausgabe von Daten,
• eine Komponenten- und/oder Anlagendatenstruktur (8), die zur Konfiguration verfügbare Komponenten- und/oder Anlagendaten enthält und
• eine Konfigurationseinheit (7),
**dadurch gekennzeichnet, dass**
• die Konfigurationseinheit (7) mit der, auf einem, insbesondere physikalischen, Datenträger bereitgestellten, Komponenten- und/oder Anlagendatenstruktur (8), vorzugsweise über ein Netzwerk, verbunden ist, und
• die Konfigurationseinheit (7), Anlagen der Grundstoffindustrie und/oder die in der Grundstoffindustrie angewandte Prozesse beschreibende Modelle, insbesondere
a.) verfügbare logische Regeln und/oder
b.) komplexe Abhängigkeiten und/oder Algorithmen, beispielsweise eine iterative Optimierung, und/oder
c.) mathematische Modelle, beispielsweise für eine Simulation, und/oder
d.) Künstliche-Intelligenz-Modelle
aufweist,
wobei die gewünschte Anlage durch eine Verknüpfung von in der Komponenten- und/oder Anlagendatenstruktur (8) enthaltenen Komponenten- und/oder Anlagendaten mit nutzerspezifischen Daten und/oder Vorgaben mittels der Konfigurationseinheit (7) anhand der abgelegten Modelle optimal zusammenstellbar und/oder dimensionierbar und in Form eines strukturierten Konfigurationsvorschlages, vorzugsweise mittels der Nutzerschnittstelle (6), ausgebbar ist.

2. Konfigurator nach Anspruch 1, **dadurch gekennzeichnet, dass** die Konfigurationseinheit (7) eine Konfigurationsspeichereinheit (9) zur Abspeicherung von Daten aufweist.

3. Konfigurator nach Anspruch 1 oder 2, **dadurch gekennzeichnet, dass** die Konfigurationseinheit (7) und/oder die Komponenten- und/oder Anlagendatenbank (8) und/oder die Konfigurationsspeichereinheit (9) und/oder die Nutzerschnittstelle (6) auf einem Server und/oder einem Client implementierbar ist, wobei gegebenenfalls Client und Server über ein Netzwerk, insbesondere ein Virtual Private Network, miteinander verbunden sind.

4. Konfigurator nach einem der Ansprüche 1 bis 3, **dadurch gekennzeichnet, dass** der Konfigurator eine externe Schnittstelle (10) aufweist, und die externe Schnittstelle mit einem Expertensystem zum Ausführen von komplexen Rechenoperationen oder Simulationen und/oder mit einem Fachmann zur interaktiven Eingabe von zusätzlichen Daten und/oder Vorgaben verbunden ist.

5. Konfigurator nach einem der Ansprüche 1 bis 4, **dadurch gekennzeichnet, dass** der Konfigurator als ein auf einem Server und/oder einer Workstation oder einem PC ablaufbares Computerprogramm implementiert ist.

6. Verfahren zur rechnergestützten Planung einer Anlage der Grundstoffindustrie, insbesondere einer hüttentechnischen Anlage und/oder Einrichtung, mit den folgenden Schritten:
• Bereitstellen von Komponenten- und/oder Anlagendaten in einer Datenstruktur,
• Prüfen einer Nutzerberechtigung eines Nutzers
• Eingabe von nutzerspezifischen Daten und/oder Vorgaben über eine Nutzerschnittstelle durch einen berechtigten Nutzer,
• Konfigurieren der Anlage durch Verknüpfen von nutzerspezifischen Daten und/oder Vorgaben mit in der Datenstruktur vorhandenen Komponenten- und/oder Anlagendaten mit Hilfe von Anlagen der Grundstoffindustrie und/oder die in Anlagen der Grundstoffindustrie angewandten Prozesse beschreibenden Modellen, insbesondere
a.) verfügbare logische Regeln und/oder
b.) komplexe Abhängigkeiten und/oder Algorithmen, beispielsweise eine iterative Optimierung, und/oder
c.) mathematischen Modellen, beispielsweise für eine Simulation, und/oder
d.) künstlicher Intelligenz Modellen
• Ausgabe des konfigurierten Produktes in Form eines strukturierten Konfigurationsvorschlages.

7. Verfahren nach Anspruch 6, **dadurch gekennzeichnet, dass**
• die Investitionskosten zur Fertigung und Bereitstellung, und gegebenenfalls Lieferung, der Anlage und/oder
• ein Zeitplan zur Fertigung und Bereitstellung, und gegebenenfalls Lieferung, der Anlage
bestimmt werden.

8. Verfahren nach Anspruch 6 oder 7, **dadurch gekennzeichnet, dass**
• die Investitionskosten zur Installation und/oder Inbetriebnahme der Anlage und/oder
• ein Zeitplan für die Installation und/oder Inbetriebnahme der Anlage bestimmt werden.

9. Verfahren nach einem der Ansprüche 6 bis 8, **dadurch gekennzeichnet, dass** die zu planende Anlage der Grundstoffindustrie eine Stranggießanlage aufweist.

10. Verfahren nach einem der Ansprüche 6 bis 9, **dadurch gekennzeichnet, dass** der Anwender über die Nutzerschnittstelle eine oder mehrere der folgenden Daten eingibt:
• Gewünschte Produktionsleistung (zu verarbeitende Menge Stahl)
• Vergossene Stahlqualitäten
• Pfannengröße
• Chargenanzahl pro Sequenz
• Gewünschte Breite des gegossenen Stranges
• Gewünschte Dicke des gegossenen Stranges

11. Verfahren nach einem der Ansprüche 6 bis 10, **dadurch gekennzeichnet, dass** in dem Projektierungsverfahren eine oder mehrere der folgenden Daten zur Konfiguration der Stranggießanlage bestimmt, insbesondere berechnet, werden:
• Leistung der Stranggießanlage
• Anzahl der Stränge
• Maximale Gießgeschwindigkeit
• Länge der Strangießmaschine
• Gießradius

12. Verfahren nach einem der Ansprüche 6 bis 11, **dadurch gekennzeichnet, daß** die zur Konfiguration der Stranggießanlage herangezogenen Modelle zumindest eines der folgenden Modelle enthalten:
• Modell zur Bestimmung und/oder Optimierung der Leistung der Stranggießanlage
• Modell zur Bestimmung und/oder Optimierung der Anzahl der Stränge
• Modell zur Bestimmung und/oder Optimierung der maximalen Gießgeschwindigkeit
• Modell zur Bestimmung und/oder Optimierung der Länge der Stranggießmaschine
• Modell zur Bestimmung und/oder Optimierung des Gießradius
• Modell zur Preisbildung, insbesondere zur Berechnung des Preises der Anlage bzw. deren Komponenten

13. Verfahren nach einem der Ansprüche 6 bis 12, **dadurch gekennzeichnet, dass** zur Ausgabe des strukturierten Konfigurationsvorschlages beschreibende Unterlagen, gegebenenfalls in Form schriftlicher Ausschreibungsunterlagen, und/oder eine, vorzugsweise zwei- und/oder dreidimensionale, Ansicht der Anlage und/oder der Komponenten der Anlage und/oder eine Simulation der Anlage erstellt werden.

14. Verfahren zum Betrieb eines Konfigurators nach einem oder mehreren der Ansprüche 1 bis 5, **dadurch gekennzeichnet, dass** die Konfigurationseinheit, und gegebenenfalls die Komponenten- und/oder Anlagendatenstruktur und/oder die Nutzerschnittstelle auf einem Server implementiert werden, und ein Nutzer nach Anmeldung autorisiert wird, den Konfigurator in Betrieb zu nehmen.

15. Verwendung des Konfigurators nach einem der Ansprüche 1 bis 5 in einer E-Business Plattform bei der Teilnehmer durch ein virtuelles Netzwerk auf den Konfigurator Zugriff haben und in der bestimmte technische Anlagen der Grundstoffindustrie über den Konfigurator konfigurierbar und/oder direkt online beim Hersteller und/oder Lieferanten und/oder beim Betreiber des Konfigurators und/oder einem Vertriebspartner bestellbar sind.

16. Verwendung des Konfigurators in einer E-Business Plattform nach Anspruch 15, **dadurch gekennzeichnet, dass** in den Konfigurator neben dem Nutzer und dem Betreiber des Konfigurators noch andere Dienstleistungsanbieter, wie z.B. Lieferant, Hersteller, Logistik, Finanzierung, Instandhaltung, Errichtung, etc, eingebunden sind.

17. Verwendung des Konfigurators in einer E-Business Plattform nach Anspruch 16, **dadurch gekennzeichnet, dass** die einzelnen Dienstleistungsanbieter in der Planungs-, und/oder Fertigungs- und/oder Lieferungs- und/oder Installations- und/oder Inbetriebnahmephase für die konfigurierte technische Anlage miteinander über die E-Business Plattform durch den Konfigurator online in Verbindung stehen und auf die Anlagen- und/oder Konfigurationsdaten zugreifen.

## Claims

1. Computer-aided configurator for configuring a plant in the basic materials industry, in particular a metallurgical plant and/or facility, which has the following parts:
• a user interface (6) for the input of user-specific data and/or specifications by an authorized user (1), and also if appropriate for the display and/or output of data,
• a component- and/or plant-data structure (8), which contains component and/or plant data available for the configuration, and
• a configuration unit (7),
**characterized in that**
• the configuration unit (7) is connected to the component- and/or plant-data structure (8), which is provided on a data carrier, in particular a physical data carrier, preferably via a network, and
• the configuration unit (7) has models describing plants in the basic materials industry and/or the processes used in the basic materials industry, in particular
a.) available logical rules and/or
b.) complex dependencies and/or algorithms, for example an iterative optimization, and/or
c.) mathematical models, for example for a simulation, and/or
d.) artificial-intelligence models,
it being possible by linking component and/or plant data contained in the component- and/or plant-data structure (8) together with user-specific data and/or specifications by means of the configuration unit (7) on the basis of the stored models for the desired plant to be optimally put together and/or dimensioned and output in the form of a structured configuration proposal, preferably by means of the user interface (6).

2. Configurator according to Claim 1, **characterized in that** the configuration unit (7) has a configuration memory unit (9) for storing data.

3. Configurator according to Claim 1 or 2, **characterized in that** the configuration unit (7) and/or the component and/or plant databank (8) and/or the configuration memory unit (9) and/or the user interface (7) can be implemented on a server and/or a client, the client and server being connected, if appropriate, to each other via a network, in particular a Virtual Private Network.

4. Configurator according to one of Claims 1 to 3, **characterized in that** the configurator has an external interface (10), and the external interface is connected to an expert system for executing complex computing operations or simulations and/or to an expert for the interactive input of additional data and/or specifications.

5. Configurator according to one of Claims 1 to 4, **characterized in that** the configurator is implemented as a computer program which can be run on a server and/or a workstation or a PC.

6. Method for the computer-aided planning of a plant in the basic materials industry, in particular a metallurgical plant and/or facility, with the following steps:
• provision of component and/or plant data in a data structure,
• checking user authorization of a user
• input of user-specific data and/or specifications via a user interface by an authorized user,
• configuring the plant by linking user-specific data and/or specifications together with component and/or plant data present in the data structure with the aid of models describing plants in the basic materials industry and/or the processes used in plants in the basic materials industry, in particular
a.) available logical rules and/or
b.) complex dependencies and/or algorithms, for example an iterative optimization, and/or
c.) mathematical models, for example for a simulation, and/or
d.) artificial-intelligence models
• output of the configured product in the form of a structured configuration proposal.

7. Method according to Claim 6, **characterized in that**
• the investment costs for the production and provision, and if appropriate delivery, of the plant and/or
• a schedule for the production and provision, and if appropriate delivery, of the plant
are determined.

8. Method according to Claim 6 or 7, **characterized in that**
• the investment costs for the installation and/or commissioning of the plant and/or
• a schedule for the installation and/or commissioning of the plant
are determined.

9. Method according to one of Claims 6 to 8, **characterized in that** the plant to be planned in the basic materials industry has a continuous casting plant.

10. Method according to one of Claims 6 to 9, **characterized in that** the user inputs one or more of the following data via the user interface:
• desired production output (amount of steel to be processed)
• steel grades cast
• ladle size
• number of batches per sequence
• desired width of the billet being cast
• desired thickness of the billet being cast

11. Method according to one of Claims 6 to 10, **characterized in that** one or more of the following data for the configuration of the continuous casting plant are determined, in particular calculated, in the project-planning procedure:
• output of the continuous casting plant
• number of billets
• maximum casting speed
• length of the continuous casting machine
• casting radius.

12. Method according to one of Claims 6 to 11, **characterized in that** the models used for the configuration of the continuous casting plant include at least one of the following models:
• model for determining and/or optimizing the output of the continuous casting plant
• model for determining and/or optimizing the number of billets
• model for determining and/or optimizing the maximum casting speed
• model for determining and/or optimizing the length of the continuous casting machine
• model for determining and/or optimizing the casting radius
• model for establishing a price, in particular for calculating the price of the plant or its components.

13. Method according to one of Claims 6 to 12, **characterized in that** descriptive documents, if appropriate in the form of written tendering documents, and/or a view of the plant and/or of the components of the plant, preferably a two-dimensional and/or three-dimensional view, and/or a simulation of the plant are created for the output of the structured configuration proposal.

14. Method for operating a configurator according to one or more of Claims 1 to 5, **characterized in that** the configuration unit, and if appropriate the component- and/or plant-data structure, and/or the user interface are implemented on a server, and a user is authorized after logging on to put the configurator into operation.

15. Use of the configurator according to one of Claims 1 to 5 in an e-business platform with which subscribers have access to the configurator through a virtual network and in which specific technical plants in the basic materials industry can be configured via the configurator and/or can be ordered directly online from the manufacturer and/or supplier and/or from the operator of the configurator and/or a sales partner.

16. Use of the configurator in an e-business platform according to Claim 15, **characterized in that**, in addition to the user and the operator of the configurator, other service providers, such as for example the supplier, manufacturer, logistics, accounts, maintenance, set-up, etc., are involved in the configurator.

17. Use of the configurator e-business platform according to Claim 16, **characterized in that** the individual service providers are in communication with one another online via the e-business platform through the configurator in the planning, and/or production and/or delivery and/or installation and/or commissioning phase for the configured technical plant, and access the plant and/or configuration data.

## Revendications

1. Configurateur assisté par ordinateur, pour la configuration d'une installation du secteur des matériaux de base, en particulier une installation et/ou un dispositif sidérurgiques, lequel configurateur présente les parties suivantes :
- une interface d'utilisateur (6) qui permet à un utilisateur autorisé (1) d'introduire des données et/ou des prescriptions spécifiques à l'utilisateur et qui permet éventuellement d'afficher et/ou de délivrer des données,
- une structure (8) de données de composants et/ou d'installation qui contient des données des composants et/ou de l'installation disponibles pour la configuration et
- une unité de configuration (7),
**caractérisé en ce que**
- l'unité de configuration (7) est reliée de préférence par un réseau à la structure (8) de données de composants et/ou d'installation préparée sur un support de données, de préférence physique,
- **en ce que** l'unité de configuration (7) présente des modèles qui décrivent des installations du secteur des matériaux de base et/ou des processus utilisés dans le secteur des matériaux de base, et en particulier :
a.) des règles logiques disponibles et/ou
b.) des dépendances complexes et/ou des algorithmes, par exemple une optimisation itérative, et/ou
c.) des modèles mathématiques, par exemple pour une simulation et/ou
d.) des modèles d'intelligence artificielle,
l'installation souhaitée pouvant être assemblée et/ou dimensionnée de manière optimale par une association de données de composants et/ou d'installation contenues dans la structure (8) de données de composants et/ou d'installation avec des données et/ou prescriptions spécifiques à l'utilisateur au moyen de l'unité de configuration (7) et à l'aide des modèles qui y sont conservés et peut être présentée de préférence au moyen de l'interface d'utilisateur (6) sous la forme d'une proposition structurée de configuration.

2. Configurateur selon la revendication 1, **caractérisé en ce que** l'unité de configuration (7) présente une unité (9) de mémoire de configuration qui conserve des données.

3. Configurateur selon les revendications 1 ou 2, **caractérisé en ce que** l'unité de configuration (7) et/ou la banque (8) de données de composants et/ou d'installation et/ou l'unité (9) de mémoire de configuration et/ou l'interface d'utilisateur (6) peuvent être installés sur un serveur et/ou un client, le client et le serveur étant éventuellement reliés l'un à l'autre par un réseau et en particulier un réseau privé virtuel.

4. Configurateur selon les revendications 1 à 3, **caractérisé en ce que** le configurateur présente une interface externe (10) et **en ce que** l'interface externe est reliée à un système expert qui exécute des opérations complexes de calcul ou des simulations et/ou à un spécialiste qui introduit de manière interactive des données et/ou des prescriptions supplémentaires.

5. Configurateur selon l'une des revendications 1 à 4, **caractérisé en ce que** le configurateur est installé sous la forme d'un programme informatique qui peut être exécuté sur un serveur et/ou un poste de travail et/ou un ordinateur personnel.

6. Procédé de planification assistée par ordinateur d'une installation du secteur des matériaux de base et en particulier d'une installation et/ou d'un dispositif sidérurgiques, lequel procédé comprend les étapes suivantes :
- préparation de données de composants et/ou d'installation dans une structure de données,
- vérification de l'autorisation d'utilisation d'un utilisateur,
- introduction par un utilisateur autorisé de données et/ou de prescriptions spécifiques à l'utilisateur, par l'intermédiaire d'une interface,
- configuration d'une installation par association de données et/ou de prescriptions spécifiques à l'utilisateur avec des données de composants et/ou d'installation présentes dans la structure de données, à l'aide de modèles qui décrivent des installations du secteur des matériaux de base et/ou des processus utilisés dans des installations du secteur des matériaux de base, en particulier :
a.) des règles logiques disponibles et/ou
b.) des dépendances complexes et/ou des algorithmes, par exemple une optimisation itérative, et/ou
c.) des modèles mathématiques, par exemple pour une simulation et/ou
d.) des modèles d'intelligence artificielle et
- présentation du produit configuré sous la forme d'une proposition structurée de configuration.

7. Procédé selon la revendication 6, **caractérisé en ce qu'**il détermine
- les coûts d'investissement pour la fabrication et la préparation et éventuellement la fourniture de l'installation et/ou
- un calendrier de fabrication et de préparation et éventuellement de livraison de l'installation.

8. Procédé selon les revendications 6 ou 7, **caractérisé en ce qu'**il détermine
- les coûts d'investissement pour l'installation et/ou la mise en service de l'installation et/ou
- un calendrier pour l'installation et/ou la mise en service de l'installation.

9. Procédé selon l'une des revendications 6 à 8, **caractérisé en ce que** l'installation du secteur de matériaux de base qui doit être planifiée présente une installation de coulée continue.

10. Procédé selon l'une des revendications 6 à 9, **caractérisé en ce que** l'utilisateur introduit une ou plusieurs des données suivantes par l'intermédiaire de l'interface d'utilisateur :
- capacité souhaitée de production (quantité d'acier à traiter)
- qualités de l'acier coulé
- taille des poches,
- nombre de charges par séquence,
- largeur souhaitée de la barre coulée et
- épaisseur souhaitée de la barre coulée.

11. Procédé selon l'une des revendications 6 à 10, **caractérisé en ce que** dans l'opération de conception du projet, on détermine, en particulier par calcul, une ou plusieurs des données suivantes pour configurer l'installation de coulée continue .
- capacité de l'installation de coulée continue,
- nombre des barres,
- vitesse maximale de coulée,
- longueur de la machine de coulée continue et
- rayon de coulée.

12. Procédé selon l'une des revendications 6 à 11, **caractérisé en ce que** les modèles utilisés pour la configuration de l'installation de coulée continue contiennent au moins l'un des modèles suivants :
- un modèle de détermination et/ou d'optimisation de la capacité de l'installation de coulée continue,
- un modèle de détermination et/ou d'optimisation du nombre des barres,
- un modèle de détermination et/ou d'optimisation de la vitesse maximale de coulée,
- un modèle de détermination et/ou d'optimisation de la longueur de la machine de coulée continue
- un modèle de détermination et/ou d'optimisation du rayon de coulée et
- un modèle de formation du prix, en particulier pour calculer le prix de l'installation et de ses composants.

13. Procédé selon l'une des revendications 6 à 12, **caractérisé en ce que** pour fournir des documents qui décrivent la proposition structurée des configurations, ces documents sont établis, éventuellement sous la forme de documents descriptifs écrits, et/ou d'une vue de l'installation et/ou des composants d'installation, de préférence en deux et/ou en trois dimensions, et/ou d'une simulation de l'installation.

14. Procédé d'utilisation d'un configurateur selon l'une ou plusieurs des revendications 1 à 5, **caractérisé en ce que** l'unité de configuration et éventuellement la structure des données de composants et/ou d'installation et/ou l'interface d'utilisateur sont installées sur un serveur, un utilisateur étant autorisé à mettre en service le configurateur après l'avoir demandé.

15. Utilisation du configurateur selon l'une des revendications 1 à 5 dans une plate-forme dite "e-business", dans laquelle des utilisateurs ont accès au configurateur par l'intermédiaire d'un réseau virtuel et dans laquelle des installations techniques définies du secteur des matériaux de base peuvent être configurées à l'aide du configurateur et/ou peuvent être commandées directement en ligne chez un fabricant et/ou chez des fournisseurs et/ou chez l'exploitant du configurateur et/ou chez un partenaire commercial.

16. Utilisation du configurateur dans une plate-forme "e-business" selon la revendication 15, **caractérisée en ce qu'**en plus de l'utilisateur et de l'exploitant du configurateur, d'autres prestataires de services, par exemple des fournisseurs, des fabricants, des logistiques, des financements, des mises en service ou des constructeurs sont inclus dans le configurateur.

17. Utilisation du configurateur dans une plate-forme "e-business" selon la revendication 16, **caractérisée en ce que** les différents prestataires de services des phases de planification, de fabrication, de fourniture, d'installation et/ou de mise en service de l'installation technique configurée sont reliés les uns aux autres en ligne par le configurateur dans la plate-forme "e-business" ou peuvent accéder aux données d'installation et/ou de configuration.
